# EUROPÄISCHE PATENTSCHRIFT

(11) **EP 1 364 527 B1**
(45) Veröffentlichungstag und Bekanntmachung des Hinweises auf die Patenterteilung: **11.10.2006**
(21) Anmeldenummer: 02716814.5
(22) Anmeldetag: 27.02.2002
(51) Int. Cl.: H04N 5/225

(54) **VIDEOKAMERA UND ADAPTER FÜR EINE VIDEOKAMERA**
VIDEO CAMERA AND ADAPTER FOR SAID VIDEO CAMERA
VIDEOCAMERA ET ADAPTATEUR DE VIDEOCAMERA

(30) Priorität: 28.02.2001 DE 10109604; 08.03.2001 EP 01105364
(43) Veröffentlichungstag der Anmeldung: 26.11.2003
(73) Patentinhaber: P + S Technik GmbH, 81671 München (DE)
(72) Erfinder: WEIGEL, Wolfgang, 85521 Ottobrunn (DE)
(74) Vertreter: Schurack, Eduard F.
(86) Internationale Anmeldenummer: PCT/EP2002/002089
(87) Internationale Veröffentlichungsnummer: WO 2002/069622

(56) Entgegenhaltungen:
- EP-A- 0 950 912
- EP-A- 1 014 705
- WO-A-01/81995

## Beschreibung

Die vorliegende Erfindung betrifft eine Videokamera mit einem Kameragehäuse, einem ersten Objektiv, durch das Licht von einer aufzunehmenden Szenerie in das Kameragehäuse einleitbar ist, und einem Halbleitersensorfeld, auf dem Licht von der aufzunehmenden Szenerie kumulierbar ist. Sie betrifft weiterhin einen Adapter für eine Videokamera mit einem Adaptergehäuse und einem Objektiv, durch das Licht von einer aufzunehmenden Szenerie in das Adaptergehäuse einleitbar ist.

Aus der WO 01/81995 A1 ist eine Filmkamera mit einem Suchersystem beschrieben, wobei das Suchersystem auch an eine Videokamera angekoppelt sein kann. Das Suchersystem umfasst eine parallel zu der optische Achse eines ersten, in der Filmkamera angeordneten Objektivs ausgebildete Projektionsfläche, wobei die Projektionsftäche parallel zu der optischen Achse in der Ebene der Projektionsfläche bewegbar ist. Die Projektionsfläche ist in einem Auskoppelstrahlengang angeordnet, wobei dieser Auskoppelstrahlengang von einem Hauptstrahlengang zum Aufzeichnen des einfallenden Lichts auf einem Filmmaterial mittels eines Spiegels ausgekoppelt wird.

Des Weiteren ist aus der EP 0 950 912 A2 ist eine Videokamera bekannt, welche zwei Objektive aufweist, wobei das aufzuzeichnende Licht durch das erste Objektiv in die Kamera einleitbar ist und an einer Projektionsfläche im Strahlengang hinter dem ersten Objektiv abgebildet wird. Das auf der Projektionsfläche abgebildete Licht wird über das zweite Objektiv auf einen Halbleitersensor abgebildet und dort aufgezeichnet, wobei das zweite Objektiv im Strahlengang zwischen der Projektionsfläche und dem Halbleitersensor angeordnet ist.

Die Erfindung befasst sich mit dem Problem der Tiefenschärfe. Seit es Videokameras gibt, werden Versuche unternommen, den "Look" eines Celluloid-Filmbildes zu kopieren. Dies gelingt aus folgenden drei Gründen nicht: Erstens ist die Auflösung von Film gegenwärtig immer noch sehr viel größer als die von Video. Zweitens ist der Kontrastumfang von Film wesentlich größer, und drittens ist die Tiefenschärfe eines 35 mm-Films deutlich geringer.

Der letztgenannte Grund mag für einen Laien eher wie ein Nachteil klingen, ist aber tatsächlich für den Profi genau das Gegenteil. Geringe Tiefenschärfe ist insbesondere bei der Herstellung von Kinofilmen von außerordentlicher Bedeutung. Das, was als besonders "filmisch" empfunden wird, nämlich eine schnell abfallende Tiefenschärfe, ist jedoch keineswegs typisch für alle existierenden Filmformate. "Super 8" oder "16 mm" sind - aufgrund der kleinen Abbildungsfläche - im ungünstigsten Fall ähnlich scharf wie ein Video. Jedoch werden Filme auf diesen Formaten auch noch nicht als besonders "filmisch" empfunden. Die Alltagswahrnehmung dessen, was "filmisch" ist, ist geprägt durch den ständigen Konsum von Materialen aus dem Bereich des 35 mm-Films.: Sämtliche Hollywoodfilme, alle Werbefilme, alle großen Videoclips entstehen immer noch ausschließlich auf diesem Format. Und dieser Konsum hat die Wahrnehmung geprägt. Beispielsweise wird ein auf 16 mm-Film gedrehter "Tatort" von kaum jemandem als besonders "filmisch" empfunden werden. Daß die auf 35mm-Film gedrehten "X-Files" irgendwie anders aussehen, bemerkt jeder Laie.

Wie bereits angedeutet, wird die Tiefenschärfe entscheidend beeinflusst von der Größe der Aufzeichnungsfläche. Ein herkömmliches 35 mm Filmnegativ ist im Vergleich zum Aufzeichnungschip einer Videokamera riesengroß. Diese Größe macht es möglich, dass die Tiefenschärfe sinkt. Dem Videofilmer hingegen gelingt es aufgrund der kleinen Fläche des Chips nicht, eine gewünschte Tiefenunschärfe zu erzielen.

Im Hinblick darauf, dass die Auflösung und der Kontrast von Videokameras beinahe täglich verbessert werden, ist die Tiefenunschärfe gegenwärtig das ungelöste Problem von Videokameras. Von der Firma Canon ist bekannt, Fotooptiken mittels eines Adapters vor eine Videokamera zu setzen. Dies resultiert jedoch darin, dass der im Hinblick auf die Filmoptik viel zu kleine Chip nur einen Ausschnitt des projizierten Bildes zeigt. Der Effekt, der dadurch entsteht, ist der, dass sich die Brennweite der Optik zu verlängern scheint. Eine Optik, die bezogen auf Kameras ein Normalobjektiv darstellt, wird auf einer Videokamera zu einem Teleobjektiv.

Um auf den kleinen Chip der Videokamera den gleichen Bildausschnitt zu bekommen, der mit einer Filmkamera mit einer beliebigen Optik erzielt wird, muss eine ungleich viel weitwinkligere Optik verwendet werden (ungefähr um das 7-fache). Dies ist zwar möglich, jedoch geht dadurch die erzielte Tiefenunschärfe verloren, da diese untrennbar mit der tatsächlichen Länge der Brennweite verbunden ist. Es gilt nämlich: Je kleiner das abgebildete Bild und je kürzer die Brennweite der Optik, die benötigt wird, um einen bestimmten Bildausschnitt darauf abzubilden, umso größer ist die Tiefenschärfe.

Der vorliegenden Erfindung liegt deshalb die Aufgabe zugrunde, eine Videokamera der eingangs genannten Art derart weiterzubilden, dass die Erzielung geringer Tiefenschärfen ermöglicht wird.

Diese Aufgabe wird durch eine Videokamera gemäß Anspruch 1 gelöst.

Durch diese zweistufige Abbildung, bei der vorzugsweise das erste Objektiv eine Filmoptik ist und das zweite Objektiv das Objektiv einer herkömmlichen Videokamera sein kann, kann wunschgemäß eine geringe Tiefenschärfe erzielt werden.

Erst durch diese Maßnahme wird ermöglicht, dass Videokameras im Bereich der Filmindustrie nicht nur zu Prüf- und Kontrollzwecken, das heißt als Hilfsmittel, eingesetzt werden, sondern zukünftig die Aufgaben übernehmen, die bisher von Filmkameras wahrgenommen wurden. Die Erfindung stellt die Kombination aus Elementen des Bereichs der Filmtechnik und Elementen des Videobereichs zur Verfügung: die Verwendung billigen und wiederholt verwendbaren Aufzeichnungsmediums, sowie das niedrigen Gewichts von der Videokamera, die Auswahl verschiedenster in der Filmindustrie gebräuchlicher Optiken bei gleichzeitiger Erzielung der gewünschten Tiefenunschärfe von der Filmkamera. Es handelt sich quasi um eine synergetische Zusammenführung der bislang getrennten Formate Film und Video.

Bei einer bevorzugten Ausführungsform ist die Projektionsfläche eine matte Fläche, insbesondere eine matte Glasscheibe. Sofern die Fläche transparent ausgebildet ist, eröffnet dies die Möglichkeit, das erste Objektiv derart anzuordnen, dass Licht von der aufzunehmenden Szenerie auf die Vorderseite der Projektionsfläche abgebildet wird, und das zweite Objektiv derart angeordnet ist, daß Licht von der Rückseite der Projektionsfläche auf das Halbleitersensorfeld abgebildet wird. Dies resultiert in einer kompakten Bauweise der Videokamera und einer Minimierung der optischen Elemente. Letzteres ist deshalb besonders bevorzugt, da durch jedes optische Element Verluste, beispielsweise in der Lichtintensität oder der Schärfe, eingeführt werden.

Für das erste Objektiv kommen bevorzugt Filmoptiken zum Einsatz, insbesondere Optiken aus dem 35 mm Bereich, wobei dann die Projektionsfiäche eine Breite von ca. 25 mm aufweist. Durch diese Anpassung der Projektionsfläche an die für das erste Objektiv verwendeten Optik wird eine optimaler Erhalt der durch das Filmobjektiv erzielten Tiefenunschärfe ermöglicht. Eine Projektions-fläche mit einer Breite von ca. 25 mm ist im Vergleich zur Fläche eines herkömmlichen CCD-Chips einer Videokamera geradezu riesig. Hinsichtlich des zweiten Objektivs liegt die wesentliche Anforderung darin, dass es derart ausgelegt sein muss, das Licht von der Projektionsfläche scharf auf das Halbleitersensorfeld abzubilden. Da die eigentliche optische Arbeit bereits von dem ersten Objektiv erledigt wird, kann deshalb das zweite Objektiv im Vergleich zum ersten Objektiv deutlich weniger hochwertig sein. Insbesondere Kann das zweite Objektiv im Hinblick auf seine eigentliche Aufgabe optimiert sein, nämlich die scharfe Abbildung des Bilds auf der Projektionsfläche auf das Halbleitersensorfeld. Aufgrund dieser Spezialisierung des Aufgabenbereichs des zweiten Objektivs lassen sich diese kostengünstig realisieren.

Üblicherweise umfasst die Videokamera einen Aufzeichnungsmechanismus, mit dem das Halbleitersensorfeld ausgelesen werden kann und die ausgelesenen Daten gespeichert werden können.

Bevorzugt ist die Projektionsfläche gekapselt, da nämlich Staub und kleine Verunreinigungen, die sich auf der Projektionsfläche absetzen, bei der vorliegenden Erfindung genau auf der Schärfeebene liegen und folglich immer scharf auf das Halbleitersensorfeld abgebildet würden. Zu diesem Zweck eignet sich besonders klares Filterglas, das vor und hinter der Projektionsfläche angeordnet ist. Durch geeignete Wahl des Abstands von der Projektionsfläche kann sichergestellt werden, daß Verunreinigungen, die sich auf dem Filterglas absetzen, nicht mehr störend auf das Halbleitersensorfeld abgebildet werden.

Damit die Struktur der Mattscheibe, d.h. die zur Erreichung der Mattierung verwendete Struktur, nicht störend die Abbildungseigenschaften einer erfindungsgemäßen Videokamera oder eines erfindungsgemäßen Adapters beeinflußt, insbesondere jedoch auch, um auf der Mattscheibe oder der Kapselung der Mattscheibe anhaftende Staubpartikel "verschwinden" zu lassen, Mittel vorgesehen, die Mattscheibe, d.h. die Projektionsfläche, zu bewegen, z.B. hin- und herzubewegen oder um eine Achse durch die Projektionsfläche zu rotieren. Die Bewegungsgeschwindigkeit ist dabei so hoch zu wählen, daß die Struktur der Mattscheibe bzw. Staubpartikel auf der Mattscheibe oder der Kapselung im aus dem Halbleitersensorfeld auslesbaren Bild nicht mehr aufgelöst werden können.

Die obige Aufgabe wird auch durch einen Adapter gemäß Anspruch 7 gelöst.

Wie bereits oben festgestellt wurde, können die Ansprüche an das zweite Objektiv relativ gering sein, so dass hierfür herkömmliche Videoobjektive eingesetzt werden können. Bevorzugt ist der Adapter so ausgebildet, dass sein Objektiv einfach gewechselt werden kann. Damit wird erreicht, dass eine günstige Videokamera durch Verwendung eines derartigen Adapters zu einem hochwertigen Aufzeichnungsgerät mutiert, wobei die Ergebnisse der Aufzeichnung hinsichtlich der Tiefenschärfe mit der von bekannten Filmkameras vergleichbar ist. Für den Fall, daß mit dem Normalobjektiv der herkömmlichen Videokamera die Projektionsfläche nicht scharf auf das Halbleitersensorfeld abgebildet werden kann, kann es nötig sein, dieses durch ein Makroobjektiv zu ersetzen. Alternativ kann eine Makrowirkung erzielt werden, indem dem Normalobjektiv ein weiteres Objektiv vorgeschaltet wird. Der Begriff Objektiv der Videokamera, wie er in der in der Anmeldung verwendet wird, soll auch diese Kombination umfassen.

Bevorzugt weist die Projektionsfläche keinerlei Markierungen oder Einzeichnungen auf. Wie bereits oben im Zusammenhang mit der erfindungsgemäßen Videokamera ausgeführt, ist die Projektionsfläche bevorzugt eine matte Fläche, insbesondere eine matte Glasscheibe, so dass das Objektiv des Adapters derart angeordnet werden kann, das Licht von der aufzunehmenden Szenerie auf die Vorderseite der Projektionsfläche abgebildet wird, wobei die Mittel zum Befestigen des Adapters an der Videokamera derart ausgelegt sind, dass das Objektiv der Videokamera auf die Rückseite der Projektionsfläche richtbar ist.

Selbstverständlich kommen für die Objektive des Adapters sämtliche aus der Filmindustrie bekannten Formate in Betracht, wobei jedoch im Hinblick auf die überreiche Auswahl "35 mm-Optiken", d.h. Optiken zur Abbildung auf 35 mm breiten Filmstreifen, unterschiedlichster Brennweiten bevorzugt sind.

Wie bereits in Zusammenhang mit der erfindungsgemäßen Videokamera ausgeführt wurde, ist die Projektionsfläche bevorzugt zwischen zwei transparenten Scheiben gekapselt, um die Abbildung von Verunreinigungen auf der Projektionsfläche auf das Halbleitersensorfeld zu verhindern und/oder es sind Mittel vorgesehen, die Projektionsfläche zu bewegen, insbesondere um eine Achse durch die Projektionsfläche zu rotieren.

Weitere vorteilhafte Ausführungsformen ergeben sich aus den Unteransprüchen.

Im Nachfolgenden wird ein Ausführungsbeispiel unter Hinweis auf die beigefügte Zeichnung näher beschrieben, die in geschnittener schematischer Darstellung den Aufbau einer erfindungsgemäßen Videokamera zeigt.

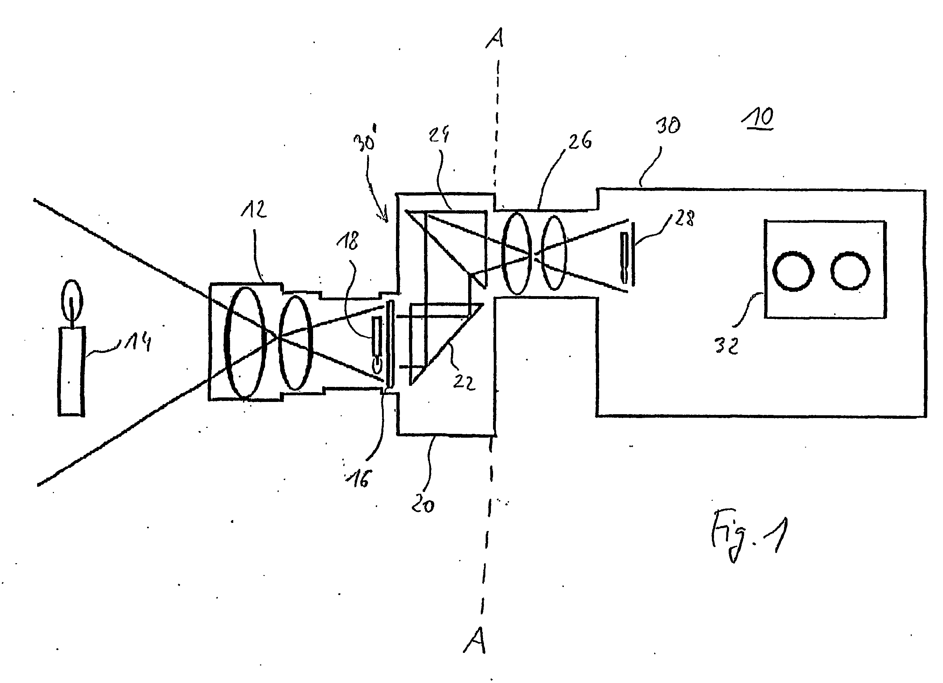

Die in Figur 1 dargestellte erfindungsgemäße Videokamera 10 umfasst ein erstes Objektiv 12, mit dem eine aufzuzeichnende Szenerie 14 scharf auf einer matten Glasscheibe 16 abgebildet werden kann. Die matte Glasscheibe 16 weist keinerlei Markierungen oder Einzeichnungen auf. Ihre Größe ist abgestimmt auf das verwendete Objektiv 12. Beispielsweise hat die matte Glasscheibe 16 bei Verwendung einer 35 mm-Optik als Objektiv 12 eine Breite von 35 mm. Im Hinblick auf die Größe der auf der matten Glasscheibe 16 durch das erste Objektiv 12 bewirkten Abbildung, siehe unten, sollte diese im Falle der Verwendung von 35mm-Optiken bevorzugt mindestens 25 mm x 19 mm groß sein. Dieses erste Objektiv 12 kann jedoch eine aus der Filmindustrie bekannte Optik beliebigen Formats sein. Wie bereits erwähnt, sind jedoch aufgrund der großen Auswahl jedoch 35 mm-Optiken bevorzugt. Die matte Glasscheibe 16 weist eine Vorderseite auf, die ein Bild 18 der abzubildenden Szenerie 14 zeigt. Das Bild 18 ist gegenüber dem Original auf dem Kopf. Das Licht, das durch die matte Glasfläche 16 hindurchtritt, wird durch einen Prismenblock 20 geleitet, um das auf dem Kopf stehende, spiegelverkehrte Bild 18 wieder aufzurichten. In Fig. 1 sind schematisch ein erstes 22 und ein zweites Prisma 24 im Prismenblock angedeutet. Für den Fachmann ist offensichtlich, daß die Aufgabe des Prismenblocks 20 auch durch andere Konstellationen, vor allem auch auf elektronischem Wege bewirkt werden kann.

An Stelle der hier gezeigten optischen Aufrichtung des Bildes 18 durch den Prismenblock 20 kommt ebenfalls eine Aufrichtung auf elektronischen Wege in Betracht. Die letztgenannte Maßnahme ist bevorzugt, da das Hindurchtreten des Lichts durch die matte Glasscheibe sowie die Prismen 22 und 24 mit einem Helligkeits- und Qualitätsverlust einhergeht.

Das das Prisma 24 verlassende Licht durchläuft ein zweites Objektiv 26, wodurch das Original 14 letztendlich wiederum auf dem Kopf stehend auf einem Halbleitersensorfeld 28, beispielsweise einem CCD (charge coupled device) abgebildet wird. In dem Gehäuse 30 der Videokamera ist weiterhin, wie in Figur 1 schematisch dargestellt, ein Aufzeichnungsmechanismus 32 untergebracht, mit dem das Halbleitersensorfeld 28 ausgelesen werden kann und die ausgelesenen Daten gespeichert werden können.

Im Hinblick auf den erfindungsgemäßen Adapter umfasst der Adapter die Elemente, die links der Linie AA in Figur 1 dargestellt sind, wobei wiederum besonders bevorzugt der Prismenblock 20 entfallen kann. Rechts von der Linie AA in Figur 1 ist im Hinblick auf den erfindungsgemäßen Adapter eine handelsübliche Videokamera dargestellt. Das Objektiv 12, die Projektionsfläche 16 sowie der Prismenblock 20 sind in einem Adaptergehäuse 30' untergebracht.

Bei einer nicht dargestellten Ausführungsform hat die Projektionsfläche eine flächig ausgebildete Vorderseite, während die Rückseite gewölbt ist. Diese Wölbung wirkt als optische Linse. Im Sinne der Erfindung ist bei dieser Ausführung diese optische Linse als Teil des zweiten Objektives zu betrachten, mit dem das Bild auf einer - vorliegend fiktiv anzunehmenden - flächig ausgebildeten Rückseite der Projektionsfläche auf das Halbleitersensorfeld abgebildet wird.

Bevorzugt ist weiterhin die Projektionsfläche zwischen einem vor und einem hinter der Projektionsfläche angeordneten klaren Filterglas gekapselt.

Damit die Struktur der Mattscheibe, d.h. die zur Erreichung der Mattierung verwendete Struktur, nicht störend die Abbildungseigenschaften einer erfindungsgemäßen Videokamera oder eines erfindungsgemäßen Adapters beeinflußt, insbesondere jedoch auch, um auf der Mattscheibe oder der Kapselung der Mattscheibe anhaftende Staubpartikel "verschwinden" zu lassen, können Mittel vorgesehen sein, die Mattscheibe, d.h. die Projektionsfläche, zu bewegen, z.B. hin- und herzubewegen und/oder um eine Achse durch die Projektionsfläche zu rotieren. Die Bewegungsgeschwindigkeit ist dabei so hoch zu wählen, daß die Struktur der Mattscheibe bzw. Staubpartikel auf der Mattscheibe oder der Kapselung im aus dem Halbleiterfeld auslesbaren Bild nicht mehr aufgelöst werden können.

Bei einer bevorzugten Realisierung erfolgt die Rotation der Mattscheibe durch einen Riemenantrieb, der an der Umfangsoberfläche einer rund ausgebildeten Mattscheibe angreift. Da bei einer ausschließlichen Rotationsbewegung der Punkt der Mattscheibe, der auf der Rotationsachse liegt, nicht bewegt wird, und dadurch dort weiterhin das Problem der Abbildung der Struktur oder von Staubpartikeln existiert, ist es noch bevorzugter, wenn die Rotationsbewegung mit einer linearen Bewegung kombiniert wird, so daß sich insgesamt eine Art "taumelnde" Bewegung oder eine exzentrisch rotierende Bewegung einstellt.

Bei bevorzugten Ausführungsformen beträgt die Rotationsgeschwindigkeit zwischen 1 und 10 Umdrehungen pro Sekunde, bevorzugt zwischen 3 und 7 Umdrehungen pro Sekunde und noch bevorzugter ca. 5 Umdrehungen pro Sekunde.

## Patentansprüche

1. Videokamera mit
- einem Kameragehäuse (30);
- einem ersten Objektiv (12) mit einer optischen Achse, durch das Licht von einer aufzunehmenden Szenerie (14) in das Kameragehäuse (30) einleitbar ist;
- einem Halbleitersensorfeld (28), auf dem Licht von der aufzunehmenden Szenerie (14) kumulierbar ist,
einer Projektionsfläche (16), die derart zum ersten Objektiv (12) angeordnet ist, dass durch das erste Objektiv (12) eingeleitetes Licht auf die Projektionsfläche (16) abgebildet wird; und
- einem zweiten Objektiv (26), das derart zur Projektionsfläche (16) und zum Halbleitersensorfeld (28) angeordnet ist, dass Licht von der Projektionsfläche (16) auf das Halbleitersensorfeld (28) abgebildet wird,
**dadurch gekennzeichnet,**
**dass** sie weiterhin Mittel aufweist, die Projektionsfläche (16) zu bewegen, wobei die Projektionsfläche (16) senkrecht zur optischen Achse positioniert ist und wobei die Bewegung der rand ausgebildeten Mattscheibe mittels Riemenantrieb hervorgerufen wird.

2. Videokamera nach Anspruch 1,
**dadurch gekennzeichnet,**
**daß** die Projektionsfläche (16) eine matte Fläche, insbesondere eine matte Glasscheibe ist.

3. Videokamera nach Anspruch 1 oder 2,
**dadurch gekennzeichnet,**
**daß** das erste Objektiv (12) eine 35mm-Optik ist und die Projektionsfläche (16) eine Breite in einem Bereich von 20 mm bis 35 mm, bevorzugt 25 mm, aufweist.

4. Videokamera nach einem der vorhergehenden Ansprüche,
**dadurch gekennzeichnet,**
**daß** das zweite Objektiv (26) ausgelegt ist, Licht von der Projektionsfläche (16) scharf auf das Halbleitersensorfeld (28) abzubilden.

5. Videokamera nach einem der vorhergehenden Ansprüche,
**dadurch gekennzeichnet,**
**daß** die Videokamera (10) einen Aufzeichungsmechanismus (32) umfaßt, mit dem das Halbleitersensorfeld (28) ausgelesen werden kann und die ausgelesenen Daten gespeichert werden können.

6. Videokamera nach einem der vorhergehenden Ansprüche,
**dadurch gekennzeichnet,**
**daß** die Projektionsfläche (16) eine Vorder- und eine Rückseite aufweist und das erste Objektiv (12) derart angeordnet ist, daß Licht von der aufzunehmenden Szenerie (14) auf die Vorderseite der Projektionsfläche (16) abgebildet wird, und das zweite Objektiv (26) derart angeordnet ist, daß Licht von der Rückseite der Projektionsfläche (16) auf das Halbleitersensorfeld (28) abgebildet wird.

7. Adapter für eine Videokamera mit
- einem Adaptergehäuse (30');
- einem Objektiv (12) mit einer optischen Achse, durch das Licht von einer aufzunehmenden Szenerie (14) in das Adaptergehäuse (30') einleitbar ist; und
einer Projektionsfläche (16), die derart zum Objektiv (12) angeordnet ist, daß durch das Objektiv (12) eingeleitetes Licht auf die Projektionsfläche (16) abgebildet wird;
wobei das Adaptergehäuse (30') Mittel zum Befestigen des Adapters an der Videokamera aufweist derart, dass das Objektiv (26) der Videokamera auf die Projektionsfläche (16) richtbar ist, so dass mit der Videokamera das Bild auf der Projektionsfläche (16) aufgezeichnet werden kann,
**dadurch gekennzeichnet,**
**dass** er weiterhin Mittel aufweist, die Projektionsfläche (16) zu bewegen, wobei die Projektionsfläche (16) senkrecht zur optischen Achse positioniert ist und wobei die Bewegung der rand ausgebildeten Mattscheibe mittels Riemenantrieb hervorgerufen wird.

8. Adapter nach Anspruch 7,
**dadurch gekennzeichnet,**
**daß** die Projektionsfläche (16) keinerlei Markierungen oder Einzeichnungen aufweist.

9. Adapter nach einem der Ansprüche 7 oder 8,
**dadurch gekennzeichnet,**
**daß** die Projektionsfläche (16) eine matte Fläche, insbesondere eine matte Glasscheibe ist.

10. Adapter nach einem der Ansprüche 7 bis 9,
**dadurch gekennzeichnet,**
**daß** das Objektiv (12) des Adapters eine 35mm-Optik ist und die Projektionsfläche (16) eine Breite in einem Bereich von 20 mm bis 35 mm, bevorzugt 25 mm, aufweist.

11. Adapter nach einem der Ansprüche 7 bis 10,
**dadurch gekennzeichnet,**
**daß** die Projektionsfläche (16) eine Vorder- und eine Rückseite aufweist und das Objektiv (12) des Adapters derart angeordnet ist, daß Licht von der aufzunehmenden Szenerie (14) auf die Vorderseite der Projektionsfläche (16) abgebildet ird, und die Mittel zum Befestigen des Adapters an der Videokamera derart ausgelegt sind, daß das Objektiv (26) der Videokamera auf die Rückseite der Projektionsfläche (16) richtbar ist.

## Claims

1. Video camera comprising
- a camera housing (30);
- a first objective (12) with an optical axis through which light from a scene (14) to be recorded is guidable into the camera housing (30);
- a semiconductor sensor field (28), on which light from the scene (14) to be recorded can be accumulated,
a projection surface (16) disposed with respect to the first objective (12) such that light introduced through the first objective (12) is imaged onto the projection surface (16); and
- a second objective (26) disposed with respect to the projection surface (16) and to the semiconductor sensor field (28) such that light from the projection surface (16) is imaged onto the semiconductor sensor field (28),
**characterized in that**
it further has means for moving the projection surface (16), with the projection surface (16) is positioned perpendicular to the optical axis and with the movement of the circular focusing screen being caused by means of belt drive.

2. Video camera according to claim 1,
**characterized in that**
the projection surface (16) is a mat surface, especially a mat glass screen.

3. Video camera according to claims 1 or 2,
**characterized in that**
the first objective (12) is a 35 mm optics and the projection surface (16) has a width in a range of 20 mm to 35 mm, preferably 25 mm.

4. Video camera according to any one of the preceding claims,
**characterized in that**
the second objective (26) is designed to image light from the projection surface (16) well-focused onto the semiconductor sensor field (28).

5. Video camera according to any one of the preceding claims,
**characterized in that**
the video camera (10) includes a recording mechanism (32), by means of which the semiconductor sensor field (28) can be read out and the read out data can be stored.

6. Video camera according to any one of the preceding claims,
**characterized in that**
the projection surface (16) has a front and a back side and the first objective (12) is disposed such that light from the scene (14) to be recorded is imaged onto the front side of the projection surface (16), and the second objective (26) is disposed such that light from the back side of the projection surface (16) is imaged onto the semiconductor sensor field (28).

7. Adapter for a video camera, comprising
- an adapter housing (30');
- an objective (12) with an optical lens through which light from a scene (14) to be recorded is guidable into the adapter housing (30'); and
a projection surface (16) disposed with respect to the objective (12) such that light guided through the objective (12) is imaged onto the projection surface (16);
wherein the adapter housing (30') has means for attaching the adapter to the video camera such that the objective (26) of the video camera can be directed to the projection surface (16), so that the image on the projection surface (16) can be recorded by the video camera,
**characterized in that**
it further has means for moving the projection surface (16), with the projection surface (16) being positioned perpendicular to the optical axis and with the movement of the circular focusing screen being caused by means of belt drive.

8. Adapter according to claim 7,
**characterized in that**
the projection surface (16) has no marks or markings.

9. Adapter according to any one of claims 7 or 8,
**characterized in that**
the projection surface (16) is a mat surface, especially a mat glass screen.

10. Adapter according to any one of claims 7 to 9,
**characterized in that**
the objective (12) of the adapter is a 35 mm optics and the projection surface (16) has a width in a range of 20 mm to 35 mm, preferably 25 mm.

11. Adapter according to any one of claims 7 to 10,
**characterized in that**
the projection surface (16) has a front and a back side and the objective (12) of the adapter is disposed such that light from the scene (14) to be recorded is imaged onto the front side of the projection surface (16), and the means for attaching the adapter to the video camera is designed such that the objective (26) of the video camera can be directed to the back side of the projection surface (16).

## Revendications

1. Caméra vidéo composée de :
- un boîtier de caméra (30) ;
- un premier objectif (12) avec un axe optique au travers duquel la lumière d'une scène à prendre (14) peut être guidée dans le boîtier de caméra (30) ;
- un champ de capteurs à semi-conducteurs (28) sur lequel la lumière de la scène à prendre (14) peut être accumulée,
- une surface de projection (16) disposée de manière telle par rapport au premier objectif (12) que de la lumière passant par le premier objectif (12) crée une image sur la surface de projection (16) ; et
- un deuxième objectif (26) disposé de manière telle par rapport à la surface de projection (16) et au champ de capteurs à semi-conducteurs (28) que de la lumière de la surface de projection (16) crée une image sur le champ de capteurs à semi-conducteurs (28),
**caractérisée en ce que**
elle présente en outre des moyens pour déplacer la surface de projection (16), la surface de projection (16) étant positionnée perpendiculairement à l'axe optique et le mouvement du verre dépoli de forme ronde étant provoqué par un entraînement à courroie.

2. Caméra vidéo selon la revendication 1,
**caractérisée en ce que**
la surface de projection (16) est une surface mate, en particulier un verre dépoli.

3. Caméra vidéo selon la revendication 1 ou 2,
**caractérisée en ce que**
le premier objectif (12) est une optique de 35 mm et que la surface de projection (16) offre une largeur comprise entre 20 mm et 35 mm, de préférence 25 mm.

4. Caméra vidéo selon l'une quelconque des revendications précédentes,
**caractérisée en ce que**
le deuxième objectif (26) est conçu pour projeter avec netteté sur le champ de capteurs à semi-conducteurs (28) de la lumière de la surface de projection (16).

5. Caméra vidéo selon l'une quelconque des revendications précédentes,
**caractérisée en ce que**
la caméra vidéo (10) comprend un mécanisme d'enregistrement (32) avec lequel le champ de capteurs à semi-conducteurs (28) peut être lu et les données lues stockées.

6. Caméra vidéo selon l'une quelconque des revendications précédentes,
**caractérisée en ce que**
la surface de projection (16) présente un côté avant et un côté arrière et que le premier objectif (12) est disposé de manière telle que de la lumière de la scène (14) à prendre est reproduite sur le côté avant de la surface de projection (16) et que le deuxième objectif (26) est disposé de manière telle que de la lumière du côté arrière de la surface de projection (16) est reproduite sur le champ de capteurs à semi-conducteurs (28).

7. Adaptateur de caméra vidéo comportant
- un boîtier d'adaptateur (30') ;
- un objectif (12) avec un axe optique au travers duquel la lumière d'une scène à prendre (14) peut être guidée dans le boîtier d'adaptateur (30') ; et une surface de projection (16) disposée de manière telle par rapport à l'objectif (12) que de la lumière passant par l'objectif (12) crée une image sur la surface de projection (16) ;
le boîtier d'adaptateur (30') présentant des moyens de fixation de l'adaptateur à la caméra vidéo de manière telle que l'objectif (26) de la caméra vidéo peut être dirigé vers la surface de projection (16), de façon à ce que l'image sur la surface de projection (16) puisse être enregistrée par la caméra vidéo,
**caractérisé en ce que**
il présente en outre des moyens pour déplacer la surface de projection (16), la surface de projection (16) étant positionnée perpendiculairement à l'axe optique et le mouvement du verre dépoli de forme ronde étant provoqué par un entraînement à courroie.

8. Adaptateur selon la revendication 7,
**caractérisé en ce que**
la surface de projection (16) ne présente aucun marquage ni inscription.

9. Adaptateur selon l'une quelconque des revendications 7 ou 8,
**caractérisé en ce que**
la surface de projection (16) est une surface mate, en particulier un verre dépoli.

10. Adaptateur selon l'une quelconque des revendications 7 à 9,
**caractérisé en ce que**
l'objectif (12) de l'adaptateur est une optique de 35 mm et que la surface de projection (16) offre une largeur comprise entre 20 mm et 35 mm, de préférence 25 mm.

11. Adaptateur selon l'une quelconque des revendications 7 à 10,
**caractérisé en ce que**
la surface de projection (16) présente un côté avant et un côté arrière et que l'objectif (12) de l'adaptateur est disposé de manière telle que de la lumière de la scène (14) à prendre est reproduite sur le côté avant de la surface de projection (16) et que les moyens pour fixer l'adaptateur à la caméra vidéo sont constitués de manière telle que l'objectif (26) de la caméra vidéo peut être dirigé vers le côté arrière de la surface de projection (16).
